# FASCICULE DE BREVET EUROPEEN

(11) **EP 3 201 027 B1**
(45) Date de publication et mention de la délivrance du brevet: **04.12.2019**
(21) Numéro de dépôt: 15788129.3
(22) Date de dépôt: 02.10.2015
(51) Int. Cl.: B60K 11/04, B60K 11/08, F16F 7/12

(54) **ASSEMBLAGE FUSIBLE D'UNE LEVRE MINCE ALLONGEE DANS UNE FENTE ALLONGEE RELATIVEMENT ETROITE ET SON APPLICATION A L'ASSEMBLAGE D'UN GUIDE-AIR SUR UNE BUSE**
BRECHBARE ANORDNUNG EINER LÄNGLICHEN DÜNNEN LIPPE IN EINER RELATIV SCHMALEN LÄNGLICHEN NUT UND ANWENDUNG DAVON ZUR MONTAGE EINER LUFTFÜHRUNG AUF EINER DÜSE
BREAKABLE ASSEMBLY OF AN ELONGATE THIN LIP IN A RELATIVELY NARROW ELONGATE SLIT AND APPLICATION OF SAME TO THE ASSEMBLY OF AN AIR GUIDE ON A NOZZLE

(30) Priorité: 03.10.2014 FR 1459486
(43) Date de publication de la demande: 09.08.2017
(73) Titulaire: Renault S.A.S., 92100 Boulogne-Billancourt (FR)
(72) Inventeur: BUI, Joseph, 78130 Les Mureaux (FR); FABRIES, Cecile, 78470 Saint Remy les Chevreuses (FR)
(86) Numéro de dépôt international: PCT/FR2015/052638
(87) Numéro de publication internationale: WO 2016/051101

(56) Documents cités:
- WO-A1-2012/084727
- DE-A1- 19 849 760
- FR-A1- 3 002 602
- JP-A- 2004 284 438
- JP-A- 2007 326 431

## Description

La présente invention concerne un assemblage fusible d'une lèvre allongée relativement mince dans une fente allongée relativement étroite, et son application à l'assemblage d'un guide-air sur une buse.

Dans un certain nombre d'applications, il est nécessaire d'emboîter un élément dans un autre, le premier élément présentant au moins une paroi se terminant par une lèvre ou lame allongée relativement mince qui doit être étroitement reçue dans une fente allongée formée dans le second élément. C'est le cas par exemple dans le domaine de la construction automobile lorsqu'il s'agit de venir emboîter sur une buse de groupe moto-ventilateur les parois haute et basse d'un guide d'air ; la buse comprend en partie haute et basse des parois parallèles horizontales sur lesquelles des plaques parallèles rattachées par un grand côté à la paroi forment des fentes allongées de faible épaisseur ouvertes sur trois côtés ; le guide d'air comprend en partie haute et basse deux lèvres allongées à bords rectilignes qui doivent s'introduire dans les fentes parallèles étroites de la buse ; à la suite de cet emboîtement, le guide d'air est finalement fixé sur la buse grâce à des éléments de clipsage complémentaires appropriés. Lors d'un choc, il arrive que la lèvre reste bloquée dans la fente, dégradant l'absorption du choc dans cette zone. Ceci peut être pénalisant dans le cadre de chocs « RCAR » utilisés pour le classement d'un véhicule par les assurances.

Le document JP 2007 326431 A décrit un assemblage d'un premier élément avec un second élément, réalisé par l'assemblage d'une lèvre mince allongée appartenant au second élément dans une fente étroite du premier élément.

Le but de l'invention est de proposer un assemblage d'une lèvre allongée relativement mince dans une fente allongée à trois côtés, relativement étroite, lequel présente une capacité améliorée d'absorption des chocs.

L'invention atteint son but grâce à un assemblage d'un premier élément avec un second élément, réalisé par l'assemblage d'une lèvre mince allongée appartenant au second élément dans une fente étroite allongée formée par les trois côtés d'une plaque plane allongée fixée parallèlement à une paroi plane du premier élément, caractérisé en ce que la lèvre mince allongée a, en direction du premier élément, un bord libre présentant au moins une encoche d'amorce de rupture et en ce que la fente allongée comporte, en regard de ladite au moins une encoche, une nervure agencée de manière à entrer en contact avec le fond de ladite encoche lors d'une avancée de la lèvre mince allongée vers ledit premier élément au-delà d'une position d'assemblage prédéterminée afin de provoquer un déchirement de ladite lèvre mince allongée.

Un tel agencement permet d'obtenir un déchirement de la lèvre mince en cas de choc, suite à déplacement des éléments au-delà d'une position d'assemblage prédéterminée, évitant ainsi son blocage à l'intérieur de la fente et améliorant l'absorption du choc. La position d'assemblage prédéterminée peut être une position d'emboîtement normale de la lèvre dans la fente, autrement dit avant tout choc.

D'autres avantages et caractéristiques de l'invention peuvent être considérés isolément ou en combinaison :
- chaque nervure peut être au moins en partie engagée dans une encoche correspondante lorsque ladite lèvre mince allongée est insérée à l'intérieur de ladite fente dans ladite position d'assemblage prédéterminée. Ceci peut faciliter le déchirement en évitant qu'une nervure soit déviée et ne pénètre pas dans une encoche.
- Ladite nervure peut s'étendre entre ladite plaque plane allongée et ladite paroi plane, sensiblement perpendiculairement audit bord libre de la lèvre mince allongée. Une telle nervure peut être aisément réalisée, notamment par moulage. Une nervure de ce type, lorsqu'elle est reliée à la fois à ladite plaque plane allongée et à ladite paroi plane, au moins sur une partie de sa longueur, présente en outre l'avantage de rigidifier la fente.
- Chaque encoche peut être réalisée dans une zone de ladite lèvre mince allongée présentant une épaisseur inférieure à celle du reste de ladite lèvre mince allongée, ce qui permet de faciliter la rupture ou le déchirement de celle-ci. En particulier, ladite zone peut présenter une épaisseur de 50 à 80% l'épaisseur de ladite lèvre mince allongée.
- L'épaisseur de ladite lèvre mince allongée peut diminuer de manière continue depuis ledit second élément vers ledit bord libre de ladite lèvre mince allongée, ce qui peut également favoriser la rupture ou le déchirement de la lèvre mince.
- L'épaisseur d'une nervure peut diminuer de manière continue en direction de ladite encoche située en regard. Ceci peut faciliter la pénétration de la nervure dans le matériau constituant la lèvre mince, favorisant son déchirement ou sa rupture.
- Une pluralité d'encoches et de nervures situées en regard peuvent être prévues, réparties régulièrement ou non le long du bord libre de la lèvre ou localisées dans des zones prédéterminées de rupture.
- Ladite encoche peut présenter sensiblement une forme de V, permettant une réalisation simple, mais d'autres formes sont envisageables pourvu qu'elles permettent une rupture de la lèvre suite à un contact avec une nervure.

Selon une application préférée, l'assemblage est l'assemblage d'un guide d'air sur une buse de ventilateur dans un véhicule automobile.

D'autres caractéristiques et avantages de l'invention ressortiront de la description suivante d'un exemple de réalisation. Il sera fait référence aux dessins annexés sur lesquels :
La figure 1 est une vue en perspective de trois-quarts arrière d'une buse de ventilateur et d'un guide d'air assemblé avec la buse, par emboîtement.
La figure 2 est une vue partielle en perspective de dessus et d'arrière de la partie haute d'une buse de ventilateur et d'un guide d'air à assembler avec la buse, par emboîtement, en position d'approche.
La figure 3 est une vue en perspective de la buse et du guide d'air de la figure 1 en position d'approche, une partie de la buse étant omise pour davantage de clarté,
La figure 4 est une vue en perspective de la buse et du guide d'air de la figure 1 en position d'emboîtement, une partie de la buse étant omise pour davantage de clarté.

Dans la présente description, les termes avant, arrière, supérieur, inférieur, font référence aux directions avant et arrière du véhicule, lorsque le système de prise d'air est monté sur le véhicule. Les axes X, Y, Z, correspondent respectivement à l'axe longitudinal (d'avant en arrière), transversal et vertical du véhicule.

Par sensiblement horizontal, longitudinal ou vertical, on entend une direction/un plan formant un angle d'au plus ±20°, voire d'au plus 10° ou d'au plus 5°, avec une direction/un plan horizontal, longitudinal ou vertical.

L'assemblage selon l'invention vise à emboîter un guide d'air 1 (second élément) sur la buse 2 (premier élément) d'un groupe moto-ventilateur.

La buse 2 se présente sous la forme d'un cadre rigide rectangulaire s'étendant de façon verticale et transversale à la direction longitudinale avant-arrière du véhicule. Ce cadre présente notamment deux parois horizontales respectivement haute et basse, dont seule la paroi horizontale haute 4 est visible sur les figures. Sur la paroi haute 4, une plaque rectangulaire allongée parallèle 6 s'attache à la paroi 4 par un pied de rattachement 5 le long du grand côté de la plaque 6; les trois autres côtés de la plaque 6 (un autre grand côté 8 et deux petits côtés 9) forment les bords ouverts (ou bords libres) d'une fente horizontale 10 ouverte vers l'avant (c'est-à-dire vers le guide d'air 1) et latéralement. Le terme « coté » s'entend ici comme un bord périphérique de la plaque 6.

Le guide d'air 1 est sous forme d'un cadre rectangulaire comportant essentiellement deux parois horizontales haute et basse, dont seule la paroi horizontale haute 11 est visible sur les figures, reliées par des côtés verticaux 12. Les parois horizontales 11 se terminent vers l'arrière par une lèvre arrière 13, dirigée vers la buse 2, et qui doit s'insérer relativement étroitement dans les fentes respectives de ladite buse 2. Sur les figures, seules la lèvre 13 et la fente 10 situées en partie haute de l'assemblage sont représentées, mais l'invention s'applique également à la lèvre et la fente située en partie basse.

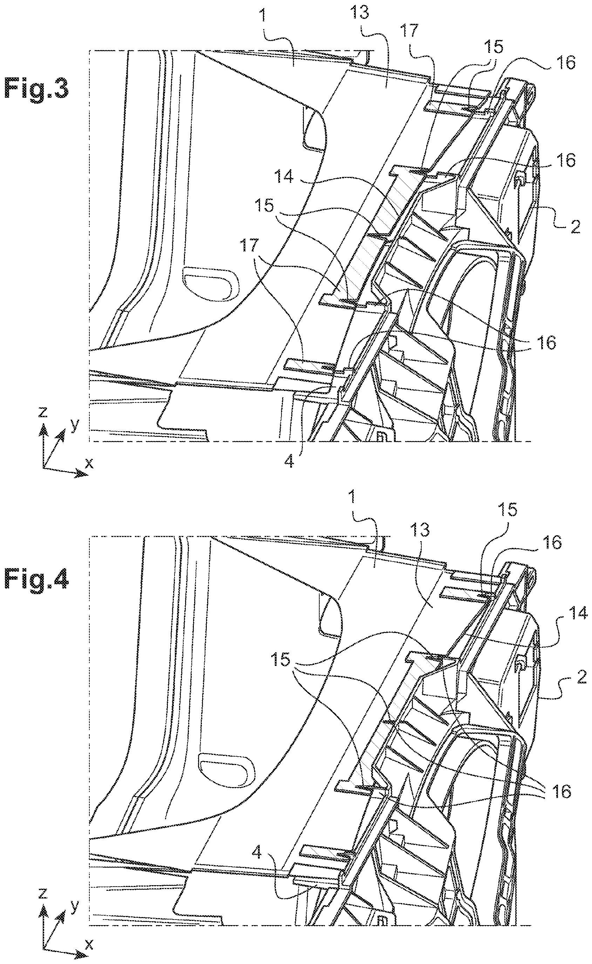

Selon l'invention, la lèvre 13 a sur un bord libre 14 en direction de la buse 2 une ou plusieurs encoches 15 d'amorce de rupture et la fente allongée 10 comporte, en regard de chaque encoche 15, une nervure 16 agencée de manière à entrer en contact avec le fond de l'encoche 15 correspondante lors d'une avancée de la lèvre 13 vers la buse 2 au-delà d'une position d'assemblage prédéterminée, correspondant à la position de la figure 4. Sur les figures 3 et 4, la plaque 6 a été ôtée afin de rendre visible les encoches 15 et les nervures 16.

Dans l'exemple représenté, l'assemblage comprend cinq encoches 15 associées chacune à une nervure 16. Ces encoches 15 présentent une forme en V. L'invention n'est toutefois pas limitée à un nombre particulier d'encoches/nervures, ni à une forme particulière d'encoche 15. Notamment, la forme des encoches pourrait être arrondie.

Chaque encoche 15 peut en outre être réalisée dans une zone 17 de la lèvre 13 présentant une épaisseur inférieure à celle du reste de la lèvre 13, tel que représenté sur la figure 3. L'épaisseur peut par exemple être réduite de 50 à 80% dans ces zones 17. En variante ou en combinaison, la lèvre 13 peut présenter une forme effilée en direction de son bord libre 14. Autrement dit, l'épaisseur de la lèvre 13 diminue de manière continue depuis le guide d'air 1 vers le bord libre 14.

Tel que visible sur les figures 3 et 4, les nervures 16 peuvent s'étendre sensiblement perpendiculairement au bord libre 14 de la lèvre 13, à savoir sensiblement suivant la direction d'emboîtement du guide d'air 1 dans la buse 2 (ici suivant la direction longitudinale X). Ces nervures 16 s'étendent sensiblement perpendiculairement à la paroi 4 de la buse 2. Ici, elles sont solidaires du pied de rattachement 5. Ces nervures 16 peuvent présenter également une forme effilée en direction de la lèvre 13, autrement dit une épaisseur diminuant de manière continue, afin de favoriser le déchirement de la lèvre 13.

En position normale d'emboîtement de la lèvre 13 dans la fente 10, tel que visible figure 4, chaque nervure 16 est au moins en partie engagée à l'intérieur de l'encoche 15 correspondante.

Lors d'un choc, notamment un choc frontal suivant la direction longitudinale X du véhicule, le guide d'air 1 est déplacé en direction de la buse 2 : chaque nervure 16 va ainsi entrer en contact avec le fond de l'encoche 15 associée et provoquer le déchirement de la lèvre 13. On comprend notamment que le début du déchirement de la lèvre 13 peut être contrôlé en choisissant de manière appropriée la distance entre la nervure 16 et le fond de l'encoche 15 associée en position normale d'emboîtement, autrement dit avant tout choc.

Il est ainsi possible de concevoir les nervures et encoches afin que le déchirement de la lèvre 13 se produise pour un déplacement prédéterminé du guide d'air 1 en direction de buse 2.

On notera en outre que l'assemblage selon l'invention peut être agencé pour faciliter l'assemblage de la lèvre 13 à l'intérieur de la fente 10 lors du montage du guide d'air 1 sur la buse 2.

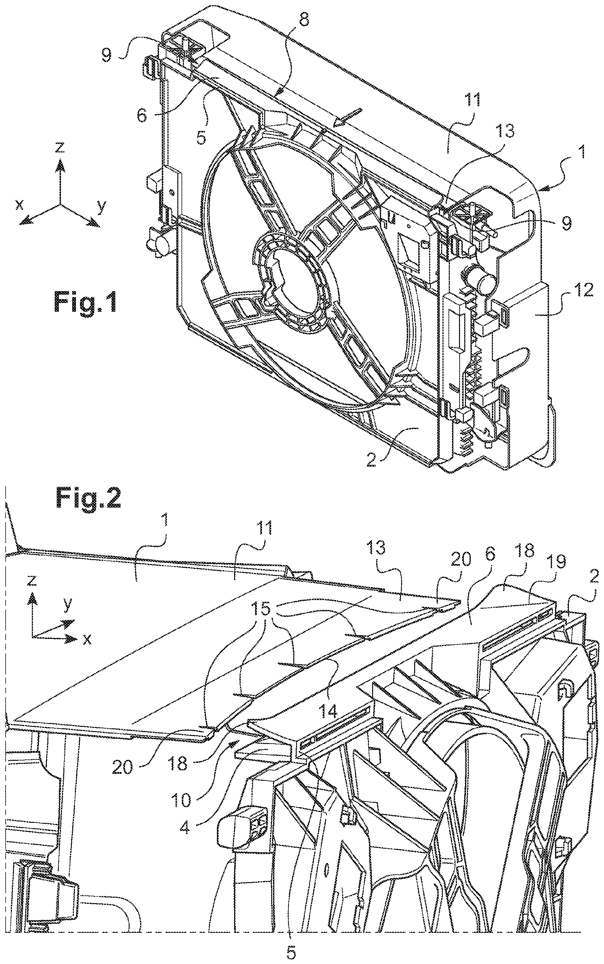

A cet effet, les coins avant 18 de la plaque 6 peuvent être « cornés », c'est-à-dire relevés vers le haut le long d'une « pliure » 19 disposée diagonalement (figure 2). On voit alors que la fente horizontale 10 a une épaisseur sensiblement constante sur toute son étendue, sauf dans les zones formées par ces coins 18 où l'épaisseur de la fente s'accroît en direction de l'angle. La lèvre 13 est en outre curviligne et concave vers l'arrière, de sorte qu'elle forme, en direction de la buse 2, un bord 14 en arc d'ellipse se terminant latéralement par deux pointes latérales avancées 20. Lorsqu'on présente l'un devant l'autre le guide d'air 1 et la buse 2 (figure 2), le monteur vient placer les pointes 20 du bord curviligne 14 en face des zones d'épaisseur augmentée formées par les coins relevés 18, ce qui est assez facile, de sorte qu'en continuant le mouvement d'approche d'un élément vers l'autre, ces pointes 20 peuvent venir porter contre la surface inférieure desdits coins relevés 18 et être guidées progressivement par ladite surface vers les zones d'épaisseur nominale de la fente 10. Dans le même temps, la forme curviligne du bord 14 permet au reste de la lèvre 13 d'avancer sans difficulté, progressivement, pour s'introduire dans la fente 10.

Il est également possible de prévoir, en variante ou en combinaison, un ou plusieurs éléments formant guide (non représentés sur les figures) solidaires du grand côté 8 de la plaque 6 et s'étendant dans le prolongement de la plaque 6 en s'écartant de la paroi 4 de la buse 2 en s'éloignant de celle-ci.

En outre, les nervures 16 peuvent former des nervures de calage pour un meilleur maintien de la lèvre 13 du guide d'air 1 à l'intérieur de la fente 10. Ces nervures 16 peuvent notamment être agencées pour coopérer avec la lèvre 13 lors de son introduction dans la fente 10 de manière à la guider au fond de cette dernière et à la caler perpendiculairement à la paroi plane 4 lorsqu'elle est entièrement introduite dans la fente 10. A cet effet, elles peuvent présenter une hauteur de plus en plus élevée du bord de la fente vers le fond de la fente, assurant un guidage de la lèvre 13 à l'intérieur de la fente 10. On notera alors que seule la partie de la nervure 16 s'étendant sur toute la hauteur séparant la plaque 6 de la paroi 4 peut alors pénétrer dans l'encoche 15 et provoquer le déchirement de la lèvre 13.

## Revendications

1. Assemblage d'un premier élément (2) avec un second élément (1), réalisé par l'assemblage d'une lèvre mince allongée (13) appartenant au second élément (1) dans une fente étroite allongée (10) formée par les trois côtés d'une plaque plane allongée (6) fixée parallèlement à une paroi plane (4) du premier élément (2), **caractérisé en ce que** la lèvre mince allongée (13) a, en direction du premier élément (2), un bord libre (14) présentant au moins une encoche (15) d'amorce de rupture et **en ce que** la fente allongée (10) comporte, en regard de ladite au moins une encoche (15), une nervure (16) agencée de manière à entrer en contact avec le fond de ladite encoche (15) lors d'une avancée de la lèvre mince allongée (13) vers ledit premier élément (1) au-delà d'une position d'assemblage prédéterminée afin de provoquer un déchirement de ladite lèvre mince allongée.

2. Assemblage selon la revendication 1, **caractérisé en ce que** chaque nervure (16) est au moins en partie engagée dans une encoche (15) correspondante lorsque ladite lèvre mince allongée (13) est insérée à l'intérieur de ladite fente (10) dans ladite position d'assemblage prédéterminée.

3. Assemblage selon l'une quelconque des revendications 1 ou 2, **caractérisé en ce que** ladite nervure (16) s'étend entre ladite plaque plane allongée (6) et ladite paroi plane (4), sensiblement perpendiculairement audit bord libre (14) de la lèvre mince allongée (13).

4. Assemblage selon quelconque des revendications 1 à 3, **caractérisé en ce que** chaque encoche (15) est réalisée dans une zone (17) de ladite lèvre mince allongée (13) présentant une épaisseur inférieure à celle du reste de ladite lèvre mince allongée (13).

5. Assemblage selon la revendication 4, **caractérisé en ce que** ladite zone (17) présente une épaisseur de 50 à 80% l'épaisseur de ladite lèvre mince allongée (13).

6. Assemblage selon l'une quelconque des revendications 1 à 5, **caractérisé en ce que** l'épaisseur de ladite lèvre mince allongée (13) diminue de manière continue depuis ledit second élément (1) vers ledit bord libre (14) de ladite lèvre mince allongée (13).

7. Assemblage selon l'une quelconque des revendications 1 à 6, **caractérisé en ce que** l'épaisseur d'une nervure (16) diminue de manière continue en direction de ladite encoche (15) située en regard.

8. Assemblage selon l'une quelconque des revendications 1 à 7, **caractérisé en ce qu'**il comprend une pluralité d'encoches (15) et de nervures (16) situées en regard.

9. Assemblage selon l'une quelconque des revendications 1 à 8, **caractérisé en ce que** ladite encoche (15) présente sensiblement une forme de V.

10. Assemblage selon l'une quelconque des revendications 1 à 9, **caractérisé en ce qu'**il s'agit de l'assemblage d'un guide d'air (1) sur une buse de ventilateur (2) dans un véhicule automobile.

## Patentansprüche

1. Zusammenbau eines ersten Elements (2) mit einem zweiten Element (1), hergestellt durch das Einfügen einer zum zweiten Element (1) gehörenden länglichen dünnen Lippe (13) in einen länglichen schmalen Schlitz (10), der von den drei Seiten einer länglichen ebenen Platte (6) geformt wird, die parallel an einer ebenen Wand (4) des ersten Elements (2) befestigt ist, **dadurch gekennzeichnet, dass** die längliche dünne Lippe (13) in Richtung des ersten Elements (2) einen freien Rand (14) hat, der mindestens eine Sollbruchstellenkerbe (15) aufweist, und dass der längliche Schlitz (10) gegenüber der mindestens einen Kerbe (15) eine Rippe (16) aufweist, die so eingerichtet ist, dass sie bei einem Vorschub der länglichen dünnen Lippe (13) zum ersten Element (1) über eine vorbestimmte Zusammenbaustellung hinaus mit dem Boden der Kerbe (15) in Kontakt kommt, um ein Reißen der länglichen dünnen Lippe hervorzurufen.

2. Zusammenbau nach Anspruch 1, **dadurch gekennzeichnet, dass** jede Rippe (16) zumindest zum Teil in eine entsprechende Kerbe (15) eingeführt wird, wenn die längliche dünne Lippe (13) in der vorbestimmten Zusammenbaustellung ins Innere des Schlitzes (10) eingefügt wird.

3. Zusammenbau nach einem der Ansprüche 1 oder 2, **dadurch gekennzeichnet, dass** die Rippe (16) sich zwischen der länglichen ebenen Platte (6) und der ebenen Wand (4) im Wesentlichen lotrecht zum freien Rand (14) der länglichen dünnen Lippe (13) erstreckt.

4. Zusammenbau nach einem der Ansprüche 1 bis 3, **dadurch gekennzeichnet, dass** jede Kerbe (15) in einem Bereich (17) der länglichen dünnen Lippe (13) hergestellt wird, der eine geringere Dicke als der Rest der länglichen dünnen Lippe (13) aufweist.

5. Zusammenbau nach Anspruch 4, **dadurch gekennzeichnet, dass** der Bereich (17) eine Dicke von 50 bis 80% der Dicke der länglichen dünnen Lippe (13) aufweist.

6. Zusammenbau nach einem der Ansprüche 1 bis 5, **dadurch gekennzeichnet, dass** die Dicke der länglichen dünnen Lippe (13) ausgehend vom zweiten Element (1) zum freien Rand (14) der länglichen dünnen Lippe (13) kontinuierlich abnimmt.

7. Zusammenbau nach einem der Ansprüche 1 bis 6, **dadurch gekennzeichnet, dass** die Dicke einer Rippe (16) in Richtung der gegenüber befindlichen Kerbe (15) kontinuierlich kontinuierlich abnimmt.

8. Zusammenbau nach einem der Ansprüche 1 bis 7, **dadurch gekennzeichnet, dass** er eine Vielzahl von Kerben (15) und Rippen (16) aufweist, die einander gegenüber angeordnet sind.

9. Zusammenbau nach einem der Ansprüche 1 bis 8, **dadurch gekennzeichnet, dass** die Kerbe (15) im Wesentlichen eine V-Form aufweist.

10. Zusammenbau nach einem der Ansprüche 1 bis 9, **dadurch gekennzeichnet, dass** es sich um den Einbau eines Luftleiters (1) auf eine Lüfterdüse (2) in einem Kraftfahrzeug handelt.

## Claims

1. Assembly of a first element (2) with a second element (1), produced by assembling an elongate thin lip (13) belonging to the second element (1) in an elongate narrow slot (10) formed by the three sides of an elongate flat plate (6) fastened parallel to a flat wall (4) of the first element (2), **characterized in that** the elongate thin lip (13) has, in the direction of the first element (2), a free edge (14) having at least one fracture initiation notch (15), and **in that** the elongate slot (10) has, facing said at least one notch (15), a rib (16) arranged so as to come into contact with the end of said notch (15) when the elongate thin lip (13) moves forward towards said first element (1) beyond a predetermined assembly position, so as to cause said elongate thin lip to tear.

2. Assembly according to Claim 1, **characterized in that** each rib (16) is at least partially engaged in a corresponding notch (15) when said elongate thin lip (13) is inserted into said slot (10) in said predetermined assembly position.

3. Assembly according to either one of Claims 1 and 2, **characterized in that** said rib (16) extends between said elongate flat plate (6) and said flat wall (4), substantially perpendicularly to said free edge (14) of said elongate thin lip (13).

4. Assembly according to any one of Claims 1 to 3, **characterized in that** each notch (15) is made in a zone (17) of said elongate thin lip (13) that has a thickness less than that of the rest of said elongate thin lip (13) .

5. Assembly according to Claim 4, **characterized in that** said zone (17) has a thickness of 50 to 80% of the thickness of said elongate thin lip (13).

6. Assembly according to any one of Claims 1 to 5, **characterized in that** the thickness of said elongate thin lip (13) decreases continuously from said second element (1) to said free edge (14) of said elongate thin lip (13) .

7. Assembly according to any one of Claims 1 to 6, **characterized in that** the thickness of a rib (16) decreases continuously in the direction of said facing notch (15).

8. Assembly according to any one of Claims 1 to 7, **characterized in that** it comprises a plurality of notches (15) and of facing ribs (16).

9. Assembly according to any one of Claims 1 to 8, **characterized in that** said notch (15) is substantially V-shaped.

10. Assembly according to any one of Claims 1 to 9, **characterized in that** it is the assembly of an air guide (1) on a fan shroud (2) in a motor vehicle.
